# EUROPEAN PATENT SPECIFICATION

(11) **EP 3 318 483 B1**
(45) Date of publication and mention of the grant of the patent: **30.12.2020**
(21) Application number: 16306461.1
(22) Date of filing: 08.11.2016
(51) Int. Cl.: B64C 11/20, B64C 11/26

(54) **REINFORCED PROPELLER BLADE**
VERSTÄRKTES PROPELLERBLATT
PALE D'HÉLICE RENFORCÉE

(43) Date of publication of application: 09.05.2018
(73) Proprietor: Ratier-Figeac SAS, 46101 Figeac Cedex (FR)
(72) Inventor: AMAT, Pascal, 46100 Figeac (FR)
(74) Representative: Dehns

(56) References cited:
- GB-A- 2 249 592
- US-A- 1 946 129
- US-A- 4 648 921

## Description

### TECHNICAL FIELD

The present disclosure relates to reinforced propeller blades.

### BACKGROUND

The efficiency of a propeller blade may be improved by decreasing the aerodynamic thickness and radius of the propeller blade at its trailing edge. However, reducing the thickness and radius of a propeller blade also reduces the structural integrity of the blade. Propeller blades may need a high damage tolerance capacity in order to prevent foreign object damage (FOD) from bird impact, for example.

Propeller blades may include leading edge and trailing edge inserts to create the desired aerodynamic profile of the blade and a shell surrounding the inserts to provide structural strength to the blade. The thickness of the blade at the trailing edge is therefore limited by the thickness of the trailing edge insert and the shell. US4648921 A discloses a blade having the features of the preamble of claim 1. US1946129 A discloses a propeller blade with a fabric covering. GB2249592 discloses a composite airfoil blade with stitched layers.

### SUMMARY

From a first aspect, this invention provides a propeller blade as set forth in claim 1. The stitches of yarn may be formed from at least one yarn extending through the parts of the shell at more than one point along the span of the blade.

The plurality of stitches may comprise at least two rows of stitches extending along the portion of the span of the blade.

The portion may extend along less than 70% of the span and more than 20% of the span of the blade.

The propeller blade may further comprise a laminate sheet of composite material extending from a core of the propeller blade towards the trailing edge, wherein the stitches of yarn also extend through the laminate sheet.

The invention also provides a method of manufacturing a propeller blade, as set forth in claim 6.

The threading may be performed before the surrounding the trailing edge insert and structural spar with the shell.

The shell may include at least two layers surrounding the blade and the yarn may be threaded through two parts of each of said at least two layers, the method further comprising cutting an outer layer of the at least two layers after the threading.

The threading may be performed with a vibrating needle or by tufting.

The threading may include forming at least one row of stitches of the yarn along less than 70% of the span and more than 20% of the span of the blade.

The method may further comprise bonding a laminate sheet to the structural spar and threading the yarn through the laminate sheet.

The yarn may be formed from carbon, glass or Kevlar®.

### BRIEF DESCRIPTION OF DRAWINGS

Some embodiments of the disclosure will now be described by way of example only and with reference to the accompanying drawings in which:
Figure 1 shows a portion of a propeller blade according to an embodiment of the invention;
Figure 2 shows a cross-sectional view of the propeller blade of Figure 1 taken through line A-A;
Figure 3 shows the trailing edge of a propeller blade of the prior art; and
Figure 4 shows the trailing edge of a propeller blade according to an embodiment of the invention.

### DETAILED DESCRIPTION

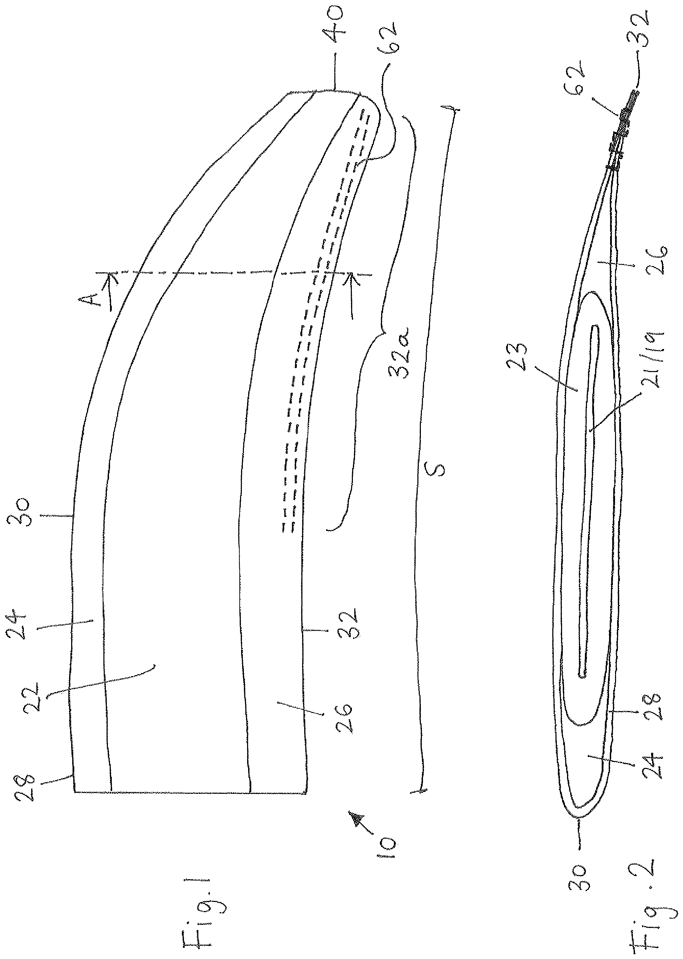

With reference to Figure 1, an exemplary propeller blade 10 is illustrated. The propeller blade 10 has a leading edge 30, a trailing edge 32, a root (not shown) and a tip 40. The blade 10 further includes a structural spar 22, a leading edge insert 24 and a trailing edge insert 26.

The structural spar 22 includes a central structural member 21, a spar foam material 19 surrounded by the central structural member 21 along at least a portion of the length of the central structural member 21 and an outer structural member 23, surrounding central structural member 21 and the spar foam 19 along the entire length of the spar 22. Although the described embodiment includes a spar foam material 19 in a central region thereof, it will be appreciated that the disclosure is applicable to hollow spars having a hollow central region with little or no foam material therein and spars having no core at all.

The central structural member 21 may be formed from pre-impregnated laminate sheets (pre-pregs). The pre-pregs may be impregnated with resin or thermoplastic material. Pre-pregs may increase the stiffness of the foam to facilitate braiding thereon, by reducing or preventing bending or deflection of the foam. Pre-pregs may also help prevent infiltration of resin into the foam material during construction of the spar. The spar foam 19 is formed from PU (polyurethane) foam material, although other foam or lightweight materials may be used, such as honeycomb materials or balsa. The outer structural member 23 may be in the form of a braided layer, for example comprising carbon fibres, although other structural materials may be used. In embodiments, the outer structural member 23 comprises unidirectional plies of carbon fibres.

The leading edge and trailing edge inserts 24, 26 are positioned adjacent the leading edge and trailing edge of the spar 22 respectively and are surrounded by a shell 28, for example, a Kevlar® sock. In alternative embodiments the shell 28 could be in the form of a glass fibre or carbon fibre shell.

The blade 10 includes stitches of yarn 62 along the trailing edge 32 of the blade 10. The trailing edge stitches 62 extend from the tip 40 of the blade 10 towards the root of the blade 10 along a portion 32a of the trailing edge 32. Although the trailing edge stitches 62 of the embodiment extend over a portion 32a that is about one third of the length of the trailing edge 32, it will be appreciated that the stitches may extend over a greater or lesser extent of the trailing edge 32 as required.

As shown in Figure 2, the trailing edge stitches 62 extend through plies of the shell 28 only. That is, there is no foam material of the trailing edge insert 26 between the plies of the shell 28 through which the trailing edge stitches 62 extend. The trailing edge stitches 62 therefore act to clamp two opposing parts of the shell 28 together, away from the foam insert 26 in order to allow a thickness of the blade 10 at the trailing edge 32 that is equal to the twice the thickness of the shell material 28 only.

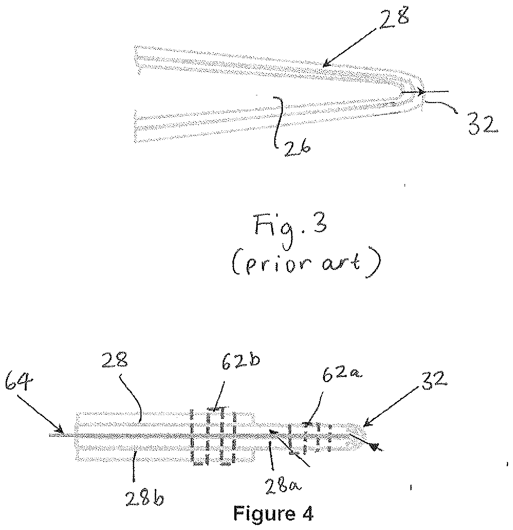

For illustrative purposes, Figure 3 shows a detail view of the trailing edge of a propeller blade 10 according to a known design. The trailing edge of blade 10 includes a trailing edge insert 26 and a shell 28, such as a Kevlar ® sock, extending around the insert 26. It will be appreciated that the minimum thickness of the blade 10 of this design is therefore limited by the thickness of the insert 26 at its trailing edge as well as the thickness of the shell material 28.

Figure 4 shows a detail view of a trailing edge region of a propeller blade 10 according to a further embodiment. The trailing edge 32 further includes a sheet 64 of pre-preg material. The sheet 64 may be formed from plies of carbon or glass fibre fabric impregnated with an epoxy resin or thermoplastic material. The sheet 64 may be a separate sheet 64 bonded to the central structural member 21. The sheet 64 extends towards the trailing edge 32 of the blade 10 beyond the trailing edge insert 26 without foam material or hollow space therein. The sheet 64 may extend along part of or the whole of the span S of the spar 22. In these embodiments, the sheet 64 may be formed in a similar manner as described above. For example, pre-pregs for forming the sheet may be placed in the mould and kept in compression along the trailing edge such that they are bonded together and no foam is injected therebetween.

Shell material 28 extends around the sheet 64. In this embodiment a first layer 28a of shell material extends around the trailing edge of the sheet 64 to form the trailing edge 32 of the blade 10. Further layers or plies 28b are attached to the first layer 28a on an outer surface thereof on either side of the sheet 64. The further layers 28b do not extend all the way to the trailing edge 32 of the blade 10; rather they are spaced therefrom to further reduce the thickness of the blade 10 at its trailing edge 32. The further layers 28b could be formed by cutting the outer layers of the shell 28 after application to the blade 10 or could be cut or separately formed prior to application to the blade 10.

In the embodiment of Figure 4, the shell material 28 includes two, spaced apart rows of stitches 62 in two regions adjacent the trailing edge 32. The first row of stiches 62a extends through the sheet 64 and the first layer of shell material 28a only. The second row of stitches 62b extends through the sheet 64, the first layer of shell material 28a and the further layers of shell material 28b.

The shell 28 may be stitched prior to attachment or may be provided with additional pre-preg plies positioned in the trailing edge 32 to draw out the shell 28 and enable subsequent stitching of the trailing edge 32 in situ. Shell 28 and spar 22 are injected with resin and the blade 10 is then cured. In this way, the leading edge and trailing edge foam inserts 24, 26 are bonded to the shell 28 and the shell 28 is also bonded to the spar 22, in a single co-curing process.

In any of the embodiments described above, the stitches of yarns 62 may be arranged such that a single yarn 62 extends through the shell 28 more than once. For example, a single yarn 62 may extend through the shell 28 three or more times over a portion or the entire span S of the blade 10. Such yarns 62 may be threaded through the blade 10 in any number of ways as known in the art. For example, the yarns 62 may be threaded through the blade 10 using a stitching machine or by tufting. Stitching could be performed by various methods as known in the art including with or without knots. In embodiments, the stitching may be performed with a vibrating needle. The vibration applied to the needle facilitates puncturing of the shell 28 and/or sheet 64. Tufting may involve inserting the yarns 62 through the shell 28 using a needle that, after insertion, moves back along the same trajectory leaving a loop of the yarn 62 on the bottom of the structure. All of the above-described threading techniques may be performed automatically. For example, stitching may be performed by a robot having a stitching head and needle mounted thereto.

Each yarn 62 or portion of yarn 62 extending through the shell 28 may be spaced from an adjacent yarn 62 or portion of yarn 62 extending through the shell 28 by a uniform distance across the span of the blade 10. For example the yarns 62 might be spaced between 3 and 15 millimetres apart, for example 5 millimetres in the span S direction.

Each yarn 62 may be formed from a dry carbon, glass or Kevlar® dry fibre material and may include a plurality of filaments of dry fibre material twisted with or bonded with one another to form a yarn 62.

Stitches of yarn 62 in the trailing edge 32 of the blade 10 help reduce the thickness of the blade 10 in this region as described above. The yarns 62 may also reduce the amount of shell 28 repair required as a result of de-burring resin after curing the blade 10. For example, the yarns 62 may help hold the shell 28 together to prevent cutting of the shell 28 when the blade 10 is being de-burred.

The yarns 62 adjacent the trailing edge 32 help reduce the aerodynamic thickness of the blade's profile and thereby increase the efficiency of the blade 10. The yarns may further improve static and fatigue inter-laminar shear strengths (ILSS) of the composite blade 10 and improve damage tolerance and FOD strength.

## Claims

1. A propeller blade (10) comprising
a root;
a tip (40), distal from the root;
a trailing edge (32) extending from the root to the tip (40);
a structural spar (22)
a trailing edge insert (26) positioned adjacent the trailing edge (32) and arranged between the structural spar (22) and the trailing edge (32) of the propeller blade (10); and
a shell (28) forming an outer surface of the propeller blade (10) and surrounding the trailing edge insert (26)
and the structural spar (22); **characterised by** further comprising
a plurality of stitches of yarn (62) extending through two opposing parts of the shell (28) adjacent the trailing edge (32), wherein the yarns (62) do not extend through the trailing edge insert (26);
a row of the plurality of stitches (62) of yarn extending along a portion (32a) of the span (S) of the blade (10) from the tip (40) thereof.

2. The propeller blade of claim 1, wherein the plurality of stitches of yarn (62) are formed from at least one yarn extending through the opposed parts of the shell (28) at more than one point along the span (S) of the blade (10).

3. The propeller blade of claim 1 or 2, comprising at least two rows of stitches of yarn (62) extending along said portion (32a) of the span of the blade.

4. The propeller blade of any preceding claim, wherein said portion (32a) extends along less than 70% of the span (S) and more than 20% of the span (S) of the blade (10).

5. The propeller blade of any preceding claim, further comprising a laminate sheet (64) of composite material extending from the structural spar (22) of the propeller blade (10) towards the trailing edge (32), wherein the plurality of stitches of yarn (62) also extend through the laminate sheet (64).

6. A method of manufacturing a propeller blade (10) comprising:
arranging a lightweight, trailing edge insert (26) between a structural spar (22) and a trailing edge (32) of the blade (10); and
surrounding the trailing edge insert (26) and structural spar (22) with a shell (28); **characterised by**:
threading a yarn (62) through the shell (28) adjacent the trailing edge (32) such that a plurality of stitches of the yarn (62) extend through two opposed parts of the shell (28) but do not extend through the trailing edge insert (26), wherein the threading includes forming at least one row of the plurality of stitches of the yarn (62) extending along a portion (32a) of the span (S) of the blade from the tip thereof.

7. The method of claim 6, wherein the threading is performed before surrounding the trailing edge insert (26) and structural spar (22) with the shell (28).

8. The method of claim 6 or 7, wherein the shell (28) includes at least two layers surrounding the blade (10) and yarn (62) is threaded through two parts of each of said at least two layers, the method further comprising cutting an outer layer of the at least two layers after the threading.

9. The method of any of claims 6 to 8, wherein the threading is performed with a vibrating needle.

10. The method of any of claims 6 to 8 wherein the threading is performed by tufting.

11. The method of any of claims 6 to 10, wherein the portion (32a) extends along less than 70% of the span (S) and more than 20% of the span (S) of the blade (10).

12. The method of any of claims 6 to 11, further comprising bonding a laminate sheet (64) to the structural spar (22) and threading the yarn (62) through the laminate sheet (64).

13. The propeller blade of any of claims 1-5, wherein the yarn (62) is formed from carbon, glass or Kevlar®.

14. The propeller blade of any of claims 1-5, wherein the trailing edge insert (26) is foam.

## Patentansprüche

1. Propellerblatt (10), das Folgendes umfasst
eine Wurzel;
eine Spitze (40) distal von der Wurzel;
eine Abströmkante (32), die sich von der Wurzel zu der Spitze (40) erstreckt;
einen Strukturholm (22)
einen Abströmkanteneinsatz (26), der benachbart zu der Abströmkante (32) positioniert und zwischen dem Strukturholm (22) und der Abströmkante (32) des Propellerblatts (10) angeordnet ist; und
eine Schale (28), die eine Außenfläche des Propellerblatts (10) bildet und den Abströmkanteneinsatz (26) und den Strukturholm (22) umgibt; und **dadurch gekennzeichnet ist, dass** es ferner Folgendes umfasst
eine Vielzahl von Fadenstichen (62), die sich benachbart zu der Abströmkante (32) durch zwei gegenüberliegende Teile der Schale (28) erstreckt, wobei sich die Fäden (62) nicht durch den Abströmkanteneinsatz (26) erstrecken;
wobei sich eine Reihe der Vielzahl von Fädenstichen (62) entlang eines Abschnitts (32a) der Spanne (S) des Blatts (10) von dessen Spitze (40) erstreckt.

2. Propellerblatt nach Anspruch 1, wobei die Vielzahl von Fadenstichen (62) aus mindestens einem Faden gebildet ist, der sich an mehr als einem Punkt entlang der Spanne (S) des Blatts (10) durch die gegenüberliegenden Teile der Schale (28) erstreckt.

3. Propellerblatt nach Anspruch 1 oder 2, das mindestens zwei Reihen aus Fadenstichen (62) umfasst, die sich entlang des Abschnitts (32a) der Spanne des Blatts erstrecken.

4. Propellerblatt nach einem der vorstehenden Ansprüche, wobei sich der Abschnitt (32a) entlang weniger als 70 % der Spanne (S) und mehr als 20 % der Spanne (S) des Blatts (10) erstreckt.

5. Propellerblatt nach einem der vorstehenden Ansprüche, das ferner eine Laminatfolie (64) aus Verbundmaterial umfasst, die sich von dem Strukturholm (22) des Propellerblatts (10) hin zu der Abströmkante (32) erstreckt, wobei sich die Vielzahl von Fadenstichen (62) auch durch die Laminatfolie (64) erstreckt.

6. Verfahren zum Herstellen eines Propellerblatts (10), das Folgendes umfasst:
Anordnen eines leichtgewichtigen Abströmkanteneinsatzes (26) zwischen einem Strukturholm (22) und einer Abströmkante (32) des Blatts (10); und
Umgeben des Abströmkanteneinsatzes (26) und des Strukturholms (22) mit einer Schale (28); **gekennzeichnet durch**:
Einziehen eines Fadens (62) durch die Schale (28) benachbart zu der Abströmkante (32) derart, dass sich eine Vielzahl von Fadenstichen (62) durch zwei gegenüberliegende Teile der Schale (28) erstreckt, sich jedoch nicht durch den Abströmkanteneinsatz (26) erstreckt, wobei das Einziehen das Bilden mindestens einer Reihe der Vielzahl von Fadenstichen (62) beinhaltet, die sich entlang eines Abschnitts (32a) der Spanne (S) des Blatts von dessen Spitze erstreckt.

7. Verfahren nach Anspruch 6, wobei das Einziehen durchgeführt wird bevor der Abströmkanteneinsatz (26) und der Strukturholm (22) mit der Schale (28) umgeben werden.

8. Verfahren nach Anspruch 6 oder 7, wobei die Schale (28) mindestens zwei das Blatt (10) umgebende Schichten beinhaltet und der Faden (62) durch zwei Teile jeder der mindestens zwei Schichten eingezogen wird, wobei das Verfahren ferner das Schneiden einer Außenschicht der mindestens zwei Schichten nach dem Einziehen umfasst.

9. Verfahren nach einem der Ansprüche 6 bis 8, wobei das Einziehen mit einer vibrierenden Nadel durchgeführt wird.

10. Verfahren nach einem der Ansprüche 6 bis 8, wobei das Einziehen durch Tufting durchgeführt wird.

11. Verfahren nach einem der Ansprüche 6 bis 10, wobei sich der Abschnitt (32a) entlang weniger als 70 % der Spanne (S) und mehr als 20 % der Spanne (S) des Blatts (10) erstreckt.

12. Verfahren nach einem der Ansprüche 6 bis 11, das ferner das Binden einer Laminatfolie (64) an den Strukturholm (22) und das Einziehen des Fadens (62) durch die Laminatfolie (64) umfasst.

13. Propellerblatt nach einem der Ansprüche 1-5, wobei der Faden (62) aus Kohlenstoff, Glass oder Kevlar® gebildet ist.

14. Propellerblatt nach einem der Ansprüche 1-5, wobei der Abströmkanteneinsatz (26) Schaum ist.

## Revendications

1. Pale d'hélice (10) comprenant
un pied ;
une pointe (40), distale par rapport au pied ;
un bord de fuite (32) s'étendant depuis le pied vers la pointe (40) ;
un longeron structurel (22)
un insert de bord de fuite (26) positionné de manière adjacente au bord de fuite (32) et disposé entre le longeron structurel (22) et le bord de fuite (32) de la pale d'hélice (10) ; et
une coque (28) formant une surface extérieure de la pale d'hélice (10) et entourant l'insert de bord de fuite (26) et le longeron structurel (22) ;
**caractérisée en ce qu'**elle comprend en outre
une pluralité de mailles de fil (62) s'étendant à travers deux parties opposées de la coque (28) de manière adjacente au bord de fuite (32), dans laquelle les fils (62) ne s'étendent pas à travers l'insert de bord de fuite (26) ;
une rangée de la pluralité de mailles (62) de fil s'étendant le long d'une partie (32a) de l'envergure (S) de la pale (10) depuis la pointe (40) de celle-ci.

2. Pale d'hélice selon la revendication 1, dans laquelle la pluralité de mailles de fil (62) sont formées depuis au moins un fil s'étendant à travers les parties opposées de la coque (28) au niveau de plus d'un point le long de l'envergure (S) de la pale (10).

3. Pale d'hélice selon la revendication 1 ou 2, comprenant au moins deux rangées de mailles de fil (62) s'étendant le long de ladite partie (32a) de l'envergure de la pale.

4. Pale d'hélice selon une quelconque revendication précédente, dans laquelle ladite partie (32a) s'étend le long de moins de 70 % de l'envergure (S) et de plus de 20 % de l'envergure (S) de la pale (10).

5. Pale d'hélice selon une quelconque revendication précédente, comprenant en outre une feuille stratifiée (64) de matériau composite s'étendant depuis le longeron structurel (22) de la pale d'hélice (10) vers le bord de fuite (32), dans laquelle la pluralité de mailles de fil (62) s'étendent également à travers la feuille stratifiée (64).

6. Procédé de fabrication d'une pale d'hélice (10) comprenant :
la disposition d'un insert de bord de fuite (26) léger entre un longeron structurel (22) et un bord de fuite (32) de la pale (10) ; et
le fait d'entourer l'insert de bord de fuite (26) et le longeron structurel (22) avec une coque (28) ; **caractérisé par** :
l'enfilage d'un fil (62) à travers la coque (28) de manière adjacente au bord de fuite (32) de sorte qu'une pluralité de mailles du fil (62) s'étendent à travers deux parties opposées de la coque (28) mais ne s'étendent pas à travers l'insert de bord de fuite (26), dans lequel l'enfilage comporte la formation d'au moins une rangée de la pluralité de mailles du fil (62) s'étendant le long d'une partie (32a) de l'envergure (S) de la pale depuis la pointe de celle-ci.

7. Procédé selon la revendication 6, dans lequel l'enfilage est effectué avant d'entourer l'insert de bord de fuite (26) et le longeron structurel (22) avec la coque (28).

8. Procédé selon la revendication 6 ou 7, dans lequel la coque (28) comporte au moins deux couches entourant la pale (10) et le fil (62) est enfilé à travers deux parties de chacune desdites au moins deux couches, le procédé comprenant en outre la découpe d'une couche extérieure des au moins deux couches après l'enfilage.

9. Procédé selon l'une quelconque des revendications 6 à 8, dans lequel l'enfilage est effectué avec une aiguille vibrante.

10. Procédé selon l'une quelconque des revendications 6 à 8, dans lequel l'enfilage est effectué par touffetage.

11. Procédé selon l'une quelconque des revendications 6 à 10, dans lequel la partie (32a) s'étend le long de moins de 70 % de l'envergure (S) et de plus de 20 % de l'envergure (S) de la pale (10) .

12. Procédé selon l'une quelconque des revendications 6 à 11, comprenant en outre la liaison d'une feuille stratifiée (64) au longeron structurel (22) et l'enfilage du fil (62) à travers la feuille stratifiée (64).

13. Pale d'hélice selon l'une quelconque des revendications 1 à 5, dans laquelle le fil (62) est formé de carbone, de verre ou de Kevlar®.

14. Pale d'hélice selon l'une quelconque des revendications 1 à 5, dans laquelle l'insert de bord de fuite (26) est en mousse.
